# FASCICULE DE BREVET EUROPEEN

(11) **EP 0 543 715 B1**
(45) Date de publication et mention de la délivrance du brevet: **23.04.1997**
(21) Numéro de dépôt: 92403078.6
(22) Date de dépôt: 16.11.1992
(51) Int. Cl.: F16L 27/10, F01N 7/18

(54) **Dispositif pour relier par articulation des organes d'une ligne d'échappement, notamment d'un véhicule automobile**
Kompensatorartige Verbindung für Abgasleitungen, insbesondere für Kraftfahrzeuge
Compensator coupling for exhaust pipes, especially for motor vehicles

(30) Priorité: 22.11.1991 FR 9114432
(43) Date de publication de la demande: 26.05.1993
(73) Titulaire: ECIA - EQUIPEMENTS ET COMPOSANTS POUR L'INDUSTRIE AUTOMOBILE, F-25400 Audincourt (FR)
(72) Inventeur: Lagier, Jean, F-25750 Arcey (FR)
(74) Mandataire: Habasque, Etienne Joel Jean-François

(56) Documents cités:
- EP-A- 0 432 436
- DE-U- 8 521 900
- FR-A- 2 418 333
- FR-A- 2 645 939

## Description

La présente invention concerne un dispositif pour relier par articulation des organes d'une ligne d'échappement notamment d'un véhicule automobile.

De tels dispositifs sont utilisés dans les lignes d'échappement des véhicules automobiles pour permettre des mouvements relativement importants entre le moteur du véhicule et la ligne d'échappement de celui-ci.

On sait en effet que lors du démarrage ou lors de variations de charge relativement brutales de ce moteur, celui-ci a tendance à bouger par rapport au reste de la structure du véhicule et donc à la ligne d'échappement dans la mesure où celle-ci est fixée sur la structure du véhicule.

On a donc développé dans l'état de la technique un certain nombre de dispositifs connus sous le nom de découpleurs de ligne, permettant de résoudre les problèmes liés à ces déplacements et d'augmenter la durée de vie de la ligne d'échappement.

C'est ainsi qu'on a développé des dispositifs pour relier par articulation des organes d'une ligne d'échappement, notamment de véhicule automobile, qui comportent au moins un élément de conduit flexible, interposé entre les organes de la ligne, et des organes d'amortissement du déplacement relatif des extrémités de l'élément de conduit flexible et donc des organes de la ligne, régulièrement répartis autour de l'élément de conduit flexible et interposés entre des éléments d'accrochage fixés de part et d'autre de l'élément de conduit flexible.

De tels dispositifs sont par exemple décrits dans les documents DE-OS-2 838 990 et FR-A-2 531 914.

Dans le premier document mentionné précédemment, les éléments d'accrochage sont formés par des brides de raccordement, disposées aux extrémités de raccordement d'un tuyau enroulé, traversées par des boulons et reliées élastiquement à l'aide de ceux-ci, par l'intermédiaire d'un élément à ressort formant amortisseur.

Dans le deuxième document mentionné précédemment, des éléments d'appui, reliés aux extrémités de l'élément de conduit flexible, forment des poches analogues à des carters et sont mobiles l'un par rapport à l'autre, tandis que des coussins amortisseurs en fil métallique comprimé sont disposés dans les poches pour former des organes amortisseurs du déplacement.

Le document EP-A-0 432 436 décrit également un dispositif conforme au préambule de la revendication 1, dans lequel les moyens d'amortissement comprennent des ressorts.

Cependant, les dispositifs décrits dans ces documents ne donnent pas entière satisfaction.

En effet, l'utilisation d'éléments à ressort ne permet pas de découpler de manière satisfaisante le moteur de la ligne d'échappement, de sorte que des vibrations du moteur peuvent être transmises à cette ligne, ce qui a pour conséquence une production de bruit et une usure prématurée de celle-ci.

Le dispositif décrit dans le deuxième document présente une structure relativement complexe et est d'un prix de revient relativement élevé.

Le but de l'invention est donc de résoudre ces problèmes en proposant un dispositif qui soit simple, fiable, d'un encombrement réduit et d'un coût de fabrication peu élevé.

A cet effet, l'invention a pour objet un dispositif apte à relier par articulation des organes d'une ligne d'échappement notamment d'un véhicule automobile, du type comportant au moins un élément de conduit flexible, interposable entre des organes d'une telle ligne d'échappement, et des organes d'amortissement du déplacement relatif des extrémités de l'élément de conduit flexible et donc des organes de la ligne, lesdits organes d'amortissement étant régulièrement répartis autour de l'élément de conduit flexible et étant interposés entre des éléments d'accrochage fixés de part et d'autre de l'élément de conduit flexible, caractérisé en ce que chaque organe d'amortissement comprend au moins une spire de câble métallique.

L'invention sera mieux comprise à l'aide de la description qui va suivre, donnée uniquement à titre d'exemple et faite en se référant aux dessins annexés, sur lesquels :
- la Fig.1 représente une vue schématique de côté d'un premier mode de réalisation d'un dispositif selon l'invention;
- la Fig.2 représente une vue schématique en bout d'un second mode de réalisation d'un dispositif selon l'invention; et
- la Fig.3 représente une vue schématique en coupe d'un troisième mode de réalisation d'un dispositif selon l'invention.

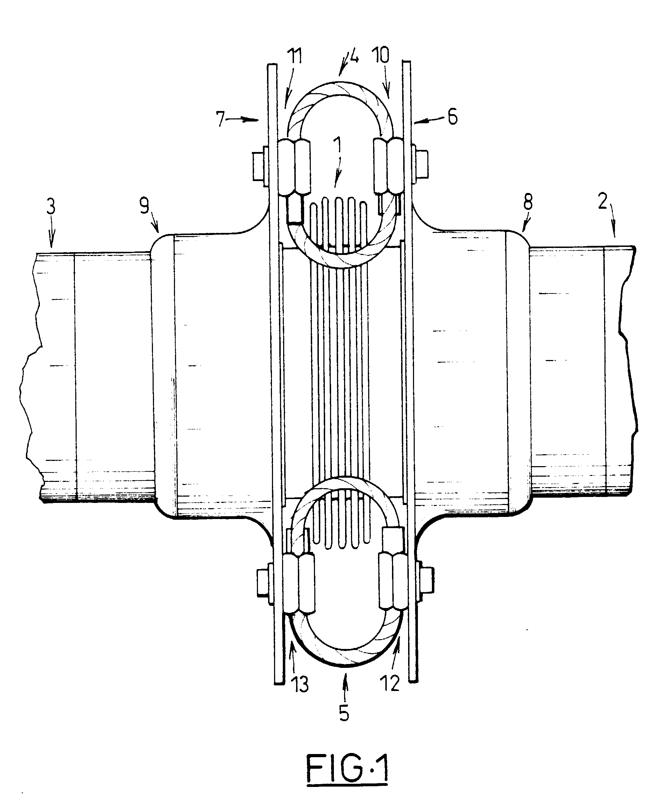

Ainsi qu'on peut le voir sur la Fig.1, un dispositif selon l'invention permet de relier par articulation des organes d'une ligne d'échappement notamment d'un véhicule automobile et comporte au moins un élément de conduit flexible désigné par la référence générale 1, cet élément de conduit flexible étant interposé entre les organes par exemple 2 et 3 de la ligne d'échappement.

Dans le mode de réalisation représenté, ces organes 2 et 3 sont constitués par des portions de tuyau d'échappement dont l'une est reliée au moteur du véhicule et l'autre au reste de la ligne d'échappement.

Par ailleurs, des organes d'amortissement du déplacement relatif des extrémités de l'élément de conduit flexible et donc des organes de la ligne, sont régulièrement répartis autour de l'élément de conduit flexible 1 et sont désignés par les références générales 4 et 5.

Ces organes d'amortissement sont interposés entre des éléments d'accrochage fixés de part et d'autre de l'élément de conduit flexible.

Dans le mode de réalisation représenté sur la Fig.1, ces éléments d'accrochage sont désignés par les références 6 et 7 et sont formés par des flasques d'accrochage fixés en 8 et 9 respectivement, par exemple par soudage, sur les extrémités de l'élément de conduit flexible.

Ces flasques peuvent présenter n'importe quelle forme appropriée, permettant l'accrochage des organes d'amortissement régulièrement autour de l'élément de conduit flexible.

Ainsi par exemple, ces flasques peuvent être carrés, rectangulaires ou autres.

Selon l'invention, chaque organe d'amortissement 4 ou 5 comprend au moins une spire de câble métallique interposée entre les éléments d'accrochage et fixée sur ceux-ci par l'intermédiaire par exemple de brides 10, 11, 12 et 13 respectivement.

Bien entendu, plusieurs spires de câble métallique peuvent également être utilisées.

Dans le mode de réalisation représenté sur cette Fig.1, le dispositif comporte par exemple quatre organes d'amortissement disposés deux à deux de part et d'autre de l'élément de conduit flexible et formés chacun par plusieurs spires de câble métallique.

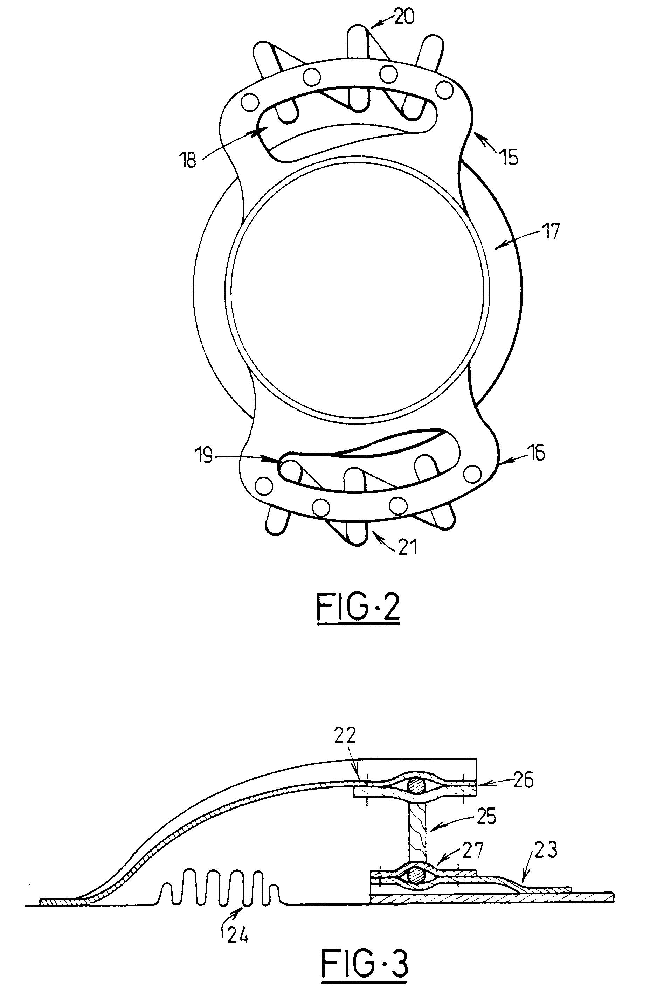

Bien entendu, d'autres modes de réalisation peuvent être envisagés, comme celui représenté sur la Fig.2, dans lequel les éléments d'accrochage sont constitués par des parties en saillie latérale 15 et 16 s'étendant à partir des extrémités de l'élément de conduit flexible 17, ces parties en saillie latérale comportant chacune un évidement 18 ou 19 respectivement.

Dans ce mode de réalisation, un organe d'amortissement 20 ou 21 est disposé de chaque côté de l'élément de conduit flexible et comprend plusieurs spires de câble métallique s'étendant entre les parties en saillie latérale en regard.

Alors que dans les deux modes de réalisation représentés sur les Figures 1 et 2, les éléments d'accrochage s'étendent en regard l'un de l'autre dans des directions générales à peu près perpendiculaires à l'axe de l'élément de conduit flexible, dans le mode de réalisation représenté sur la Fig.3, les éléments d'accrochage 22 et 23 s'étendent l'un au dessus de l'autre dans des directions générales à peu près parallèles à l'axe de l'élément de conduit flexible 24.

Dans ce mode de réalisation, chaque organe d'amortissement régulièrement réparti autour de cet élément de conduit flexible, comporte également au moins une spire de câble métallique désignée de façon générale par la référence 25 sur cette figure et fixée sur les éléments d'accrochage par l'intermédiaire de brides 26 et 27.

On conçoit donc que le dispositif selon l'invention présente une structure extrêmement simple et est d'un prix de fabrication peu élevé et d'un encombrement relativement faible.

L'amortissement des déplacements étant assuré par une spire de câble métallique, celui-ci assure également un découplage efficace des deux organes de la ligne d'échappement pour éviter la transmission des vibrations le long de celle-ci.

## Revendications

1. Dispositif apte à relier par articulation des organes d'une ligne d'échappement notamment d'un véhicule automobile, du type comportant au moins un élément de conduit flexible (1;17;24), interposable entre des organes (2,3) d'une telle ligne d'échappement, et des organes (4,5; 20,21; 25) d'amortissement du déplacement relatif des extrémités de l'élément de conduit flexible et donc des organes de la ligne, lesdits organes d'amortissement étant régulièrement répartis autour de l'élément de conduit flexible (1;17; 24) et étant interposés entre des éléments d'accrochage (6,7; 15,16; 22, 23) fixés de part et d'autre de l'élément de conduit flexible, caractérisé en ce que chaque organe d'amortissement comprend au moins une spire de câble métallique.

2. Dispositif selon la revendication 1, caractérisé en ce que les éléments d'accrochage (6,7; 15,16) s'étendent en regard l'un de l'autre dans des directions générales à peu près perpendiculaires à l'axe de l'élément de conduit flexible (1;17).

3. Dispositif selon la revendication 1, caractérisé en ce que les éléments d'accrochage (22,23) s'étendent l'un au dessus de l'autre dans des directions générales à peu près parallèles à l'axe de l'élément (24) de conduit flexible.

4. Dispositif selon l'une quelconque des revendications précédentes, caractérisé en ce qu'il comporte au moins un organe d'amortissement (20,21) disposé de chaque côté de l'élément de conduit flexible (17).

5. Dispositif selon l'une quelconque des revendications 1 à 3, caractérisé en ce qu'il comporte quatre organes d'amortissement (4,5) disposés deux à deux de part et d'autre de l'élément de conduit flexible (1).

6. Dispositif selon l'une quelconque des revendications précédentes, caractérisé en ce que chaque organe d'amortissement comprend plusieurs spires de câble métallique.

7. Dispositif selon l'une quelconque des revendications précédentes, caractérisé en ce que les spires de câble métallique sont fixées sur les éléments d'accrochage à l'aide de brides de fixation (10,11,12,13;26,27).

## Patentansprüche

1. Vorrichtung zum verschwenkbaren Haltern von Teilen einer Abgasleitung, insbesondere für Kraftfahrzeuge, mit mindestens einem flexiblen Leitungselement (1; 17; 24), das zwischen Teile (2, 3) dieser Abgasleitung einsetzbar ist, und mit Elementen (4, 5; 20, 21; 25) zum Dämpfen der relativen Verschiebung der Enden des flexiblen Leitungselements und damit von den Teilen der Leitung, wobei die Dämpfungselemente gleichmäßig um das flexible Leitungselement (1; 17; 24) herum verteilt und zwischen beiderseits des flexiblen Leitungselements befestigte Aufhängungselemente (6, 7; 15, 16; 22, 23) gesetzt sind, dadurch gekennzeichnet, daß jedes Dämpfungselement mindestens eine Metallkabel-Windung aufweist.

2. Vorrichtung nach Anspruch 1, dadurch gekennzeichnet, daß die Aufhängungselemente (6, 7; 15, 16) sich aufeinander bezogen in ungefähr senkrechten allgemeinen Richtungen zur Achse des flexiblen Leitungselements (1; 17) erstrecken.

3. Vorrichtung nach Anspruch 1, dadurch gekennzeichnet, daß die Aufhängungselemente (22, 23) sich übereinander in ungefähr parallelen allgemeinen Richtungen zur Achse des flexiblen Leitungselements (24) erstrecken.

4. Vorrichtung nach einem der vorangehenden Ansprüche, dadurch gekennzeichnet, daß sie mindestens ein Dämpfungselement (20, 21) aufweist, das jeweils neben dem flexiblen Leitungselement (17) angeordnet ist.

5. Vorrichtung nach einem der Ansprüche 1 bis 3, dadurch gekennzeichnet, daß sie vier Dämpfungselemente (4, 5) aufweist, die zu zweit beiderseits des flexiblen Leitungselements (1) angeordnet sind.

6. Vorrichtung nach einem der vorangehenden Ansprüche, dadurch gekennzeichnet, daß jedes Dämpfungselement mehrere Metallkabel-Windungen aufweist.

7. Vorrichtung nach einem der vorangehenden Ansprüche, dadurch gekennzeichnet, daß die Metallkabel-Windungen an den Aufhängungselementen mit Hilfe von Befestigungszwingen (10, 11, 12, 13; 26, 27) befestigt sind.

## Claims

1. Device capable of connecting together, with articulation, the members of an exhaust line, especially a motor vehicle exhaust line of the type including at least one flexible-pipe element (1; 17; 24) which can be interposed between members (2,3) of such an exhaust line, and members (4,5; 20,21; 25) for damping the relative motion of the ends of the flexible-pipe element and therefore of the members of the line, the said damping members being distributed uniformly about the flexible-pipe element (1; 17; 24) and being interposed between fastening elements (6,7; 15,16; 22,23) fixed on each side of the flexible-pipe element, characterized in that each damping member comprises at least one turn of metallic cable.

2. Device according to Claim 1, characterized in that the fastening elements (6,7; 15,16) extend facing one another in overall directions which are more or less perpendicular to the axis of the flexible-pipe element (1; 17).

3. Device according to Claim 1, characterized in that the fastening elements (22,23) extend one above the other in overall directions which are more or less parallel to the axis of the flexible-pipe element (24).

4. Device according to any one of the preceding claims, characterized in that it includes at least one damping member (20,21) arranged on each side of the flexible-pipe element (17).

5. Device according to any one of Claims 1 to 3, characterized in that it includes four damping members (4,5) arranged in pairs on either side of the flexible-pipe element (1).

6. Device according to any one of the preceding claims, characterized in that each damping member comprises several turns of metallic cable.

7. Device according to any one of the preceding claims, characterized in that the turns of metallic cable are fixed to the fastening elements using fixing clamps (10,11,12,13; 26,27).
